# EUROPÄISCHE PATENTSCHRIFT

(11) **EP 2 780 482 B1**
(45) Veröffentlichungstag und Bekanntmachung des Hinweises auf die Patenterteilung: **30.12.2015**
(21) Anmeldenummer: 12778719.0
(22) Anmeldetag: 25.10.2012
(51) Int. Cl.: C21C 5/46, F27D 3/16, F27D 19/00, F27D 21/00, G01F 23/22, G01F 23/00, G01F 23/26

(54) **BLASLANZE FÜR EINEN BOF-KONVERTER**
BLOWING LANCE FOR A BOF CONVERTER
LANCE DE SOUFFLAGE DESTINÉE À UN CONVERTISSEUR BOF

(30) Priorität: 15.11.2011 DE 102011086324
(43) Veröffentlichungstag der Anmeldung: 24.09.2014
(73) Patentinhaber: SMS group GmbH, 40237 Düsseldorf (DE)
(72) Erfinder: UEBBER, Norbert, 40764 Langenfeld (DE); ODENTHAL, Hans-Jürgen, 40822 Mettmann (DE)
(74) Vertreter: Klüppel, Walter
(86) Internationale Anmeldenummer: PCT/EP2012/071121
(87) Internationale Veröffentlichungsnummer: WO 2013/072170

(56) Entgegenhaltungen:
- EP-A2- 0 215 483
- JP-A- S5 743 918
- JP-A- H04 301 028
- JP-A- H05 255 726
- US-A1- 2006 157 899

## Beschreibung

### Technisches Gebiet

Die vorliegende Erfindung betrifft eine Blaslanze für einen Basic Oxygen Furnace (BOF)-Konverter.

### Stand der Technik

Bei der Stahlerzeugung in einem BOF-Konverter wird Sauerstoff mit Hilfe einer Blaslanze auf eine in einem Konvertergefäß gehaltene Metallschmelze aufgeblasen. Im Kopf der Blaslanze befinden sich dabei typischerweise mehrere konvergent-divergente Lavaldüsen, welche den Sauerstoff auf Überschallgeschwindigkeit beschleunigen. Der Sauerstoff trifft dann auf die Oberfläche der Schmelze und erzeugt dort eine oszillierende Blasmulde. Der auf diese Weise auf die Oberfläche der Schmelze aufgebrachte Sauerstoff sorgt für eine intensive Entkohlungsreaktion in der Schmelze. Dabei werden Metalltröpfchen aus der Schmelze herausgerissen und es bildet sich eine Schaumschlacke in dem Konvertergefäß.

Um den entsprechenden Konverterprozess führen zu können, ist der Zustand sowie die Höhe der Schlacke in dem Konvertergefäß von Bedeutung. Weiterhin ist es notwendig, eventuelle Verbärungen an der Blaslanze zu erkennen. Ein Auswurf von Schlacke aus dem Konvertergefäß muss erkannt werden, um diesen dann wieder zu unterbinden.

Der Schlackenzustand ist für die Führung des Konverterprozesses eine wesentliche Größe, da die Ausbildung einer guten Schmelze-Schlacke-Emulsion im BOF-Konverter entscheidend für den Stoffumsatz ist. Durch die Entkohlungsreaktion wird das Volumen der Schlacke vergrößert, unter Umständen hin bis zum Auswurf der Schlacke aus dem Konvertergefäß. Während eine angemessene Volumenvergrößerung der Schlacke für den Prozess vorteilhaft ist, gilt es, den Schlackenauswurf zu vermeiden.

Bisher ist bekannt, den Schlackenzustand über Schwingungen der Blaslanze zu erfassen, wobei ein konventioneller Schwingungsaufnehmer am Lanzenschlitten bzw. am Lanzendom der obersten Blaslanze des Konverters vorgesehen ist, mittels welchem Schwingungen der Lanze erfasst werden. Aus dem Charakter der Schwingungen der Lanze werden Rückschlüsse auf das Maß der Schlackenbildung und auf das Maß der Neigung zum Schlackenauswurf gezogen. Ein entsprechendes Verfahren wird beispielsweise in der Veröffentlichung "Walker, Chemeny, Johnes: Vessel Slopping Detection", AIS TECH 2005, Proceedings-Volume I, Seite 711 bis 720 beschrieben.

In den bekannten Verfahren erfolgt die Schwingungsmessung am Lanzenschlitten, da die Schwingungsaufnehmer dort thermisch geschützt sind und ein Lanzenwechsel ohne Rücksicht auf die Sensorik erfolgen kann, also ein schneller und einfacher Lanzenwechsel durchgeführt werden kann. Mittels unterschiedlicher Methoden kann durch Wegmessung der Lanzenauslenkung oberhalb des Lanzendomes, beispielsweise mechanisch, hydraulisch oder mittels Ultraschall, die Schwingung der Lanze von außerhalb gemessen werden.

Nachteilig an den vorbekannten Lösungen ist, dass die am Lanzenschlitten gemessenen Schwingungen eine relativ geringe Amplitude aufweisen und entsprechend das Signal-Rauschverhältnis relativ gering ist. Weiterhin werden die am Lanzenschlitten gemessenen Schwingungen von Prozess-unabhängigen Größen beeinflusst, beispielsweise vom Schwingungsverhalten des Lanzendomes sowie vom Schwingungsverhalten des Lanzenschlittens. Entsprechend sind die Genauigkeit sowie der Informationsgehalt der Schwingungen am Lanzenschlitten geringer, da diese von unterschiedlichen Faktoren beeinflusst sind. In der Nähe des Lanzendomes angeordnete Messfühler hingegen tragen die Gefahr in sich, dass sie durch Hitze und Staub beschädigt werden können und entsprechend schnell verschleißen.

Aus den Druckschriften JP H04 301028 A, JP H05 255726 A, JP S57 43918 A, US 2006/157899 A1 und EP 0 215 483 A2 Ist die Verwendung von Blaslanzen für einen Konverter bei der Stahlherstellung bekannt.

### Darstellung der Erfindung

Entsprechend ist es eine Aufgabe der vorliegenden Erfindung, die Genauigkeit bei der Führung des Konverterprozesses noch weiter zu verbessern.

Die Aufgabe wird mit einer Blaslanze für einen BOF-Konverter mit den Merkmalen des Anspruchs 1 gelöst. Vorteilhafte Weiterbindungen ergeben sich aus den Unteransprüchen.

Entsprechend ist eine Blaslanze für einen BOF-Konverter vorgesehen, wobei erfindungsgemäß ein Schwingungssensor zur Detektion der Lanzenschwingungen innerhalb der Blaslanze vorgesehen ist.

Durch die Aufnahme des Schwingungssensors innerhalb der Blaslanze können einige Störgrößen ausgeschaltet werden, die bei einer externen Messung der Schwingungen die Messergebnisse beeinflussen. Weiterhin kann durch die Anordnung des Schwingungssensors innerhalb der Blaslanze eine Positionierung des Schwingungssensors an einer beliebigen Stelle entlang der Blaslanze vorgenommen werden, so dass eine optimale Messposition erreicht werden kann, welche die Genauigkeit der Schwingungsmessung weiter verbessert. Dadurch kann die Führung des Konverterprozesses verbessert werden.

Bevorzugt wird der Schwingungssensor am unteren Ende der Blaslanze angeordnet, wobei die Blaslanze bevorzugt einen Anbindungsabschnitt zum Anbinden eines Lanzenkopfes aufweist und der Schwingungssensor bevorzugt in der Nähe des Anbindungsabschnittes innerhalb der Blaslanze angeordnet ist.

Der Begriff "unteres Ende der Blaslanze" bezeichnet das in den Konverter einzuführende Ende der Blaslanze. Das "obere Ende" der Blaslanze ist dem "unteren Ende entgegengesetzt angeordnet.

Dadurch, dass der Schwingungssensor zur Aufnahme der Lanzenschwingungen am unteren Ende der Blaslanze und bevorzugt im Bereich eines Anbindungsabschnittes zum Anbinden des Lanzenkopfes an die Blaslanze angeordnet ist, wird eine erheblich höhere Schwingungsamplitude gemessen. Auf diese Weise kann das Signal-Rauschverhältnis verbessert werden. Weiterhin ist das Schwingungsverhalten der Blaslanze am Lanzenkopf weitgehend bzw. vollständig nur von der umgebenden Schlacke bzw. den entsprechenden Verbärungen beeinflusst, nicht jedoch von anderen, den eigentlich zu führenden Konverterprozess nicht betreffenden Größen. Entsprechend kann über eine Messung des Schwingungsverhaltens der Lanze am Lanzenkopf eine wesentlich genauere Schwingungsmessung erreicht werden, wodurch erreicht werden kann, dass der Konverterprozess besser und genauer geführt werden kann.

Insbesondere kann durch die besonders genaue Messung des Schwingungsverhaltens am Lanzenkopf erreicht werden, dass der Schlackenzustand aus den Schwingungen der Blaslanze besonders genau ermittelt werden kann, was darin resultiert, dass der Konverterprozess besonders genau geführt werden kann.

Der Zustand zwischen der jeweiligen Blaslanzenschwingung und dem Schlackestand im Konverter ist wie folgt: Ist der Schlackestand niedrig, so sind die Schwingungen der Blaslanze im Wesentlichen dominiert durch die Eigenschwingungen der Blaslanze selbst. Diese Schwingungen sind im Wesentlichen harmonische Schwingungen. Bei einem höheren Schlackestand bzw. einem hohen Schlackenstand, bei welchem die Blaslanze zumindest teilweise in die Schlacke eingehüllt wird, treten zu den vorwiegend harmonischen Bestandteilen der Eigenschwingungen der Blaslanze Schwingungen hinzu, welche durch die Kräfte der turbulenten Schlacke hervorgerufen werden, so dass hier stärkere und stochastisch geprägte Schwingungsanteile vorliegen. Diese sind ein Maß für den Schlackenstand.

Dadurch, dass die Schwingungen durch den Schwingungssensor innerhalb der Blaslanze gemessen werden, werden weiterhin weitere Störfaktoren ausgeschlossen, welche sich durch die herkömmliche externe Messung der Schwingungen ergeben.

In einer bevorzugten Weiterbildung der Blaslanze ist der Schwingungssensor in einem Innenrohr angeordnet, welches zur Führung von Sauerstoff durch die Blaslanze dient.

Dadurch, dass der Schwingungssensor im Innenrohr angeordnet ist, durch welches auch der Sauerstoff hindurch strömt, kann erreicht werden, dass er gut gekühlt wird. Insbesondere liegt der Schwingungssensor auf diese Weise innerhalb der Bereiche mit Wasserkühlung und wird weiterhin stetig vom Sauerstoff umspült, so dass Temperaturschädigungen des Schwingungssensors reduziert bzw. ausgeschlossen werden können.

Bevorzugt ist mindestens eine Messleitung zur Kontaktierung des Schwingungssensors innerhalb der Blaslanze geführt. Dadurch, dass die Messleitungen innerhalb der Blaslanze geführt werden, wird sichergestellt, dass hier eine zuverlässige Datenverbindung zwischen dem Schwingungssensor und der entsprechenden Auswertvorrichtung vorgesehen ist. Weiterhin sind die Messleitungen auf diese Weise gut vor den im Konverter herrschenden Bedingungen geschützt.

In diesem Zusammenhang ist es besonders bevorzugt, wenn eine druckdichte Durchführung der Messleitung im oberen Ende der Blaslanze vorgesehen ist, bevorzugt in Form einer Steckverbindung im Bereich eines Sauerstoffflansches. Eine druckdichte Durchführung der Messleitungen durch die Lanze erlaubt es, die Messleitung tatsächlich innerhalb der Lanze zu führen, bevorzugt innerhalb des Innenrohrs, durch welches der Sauerstoff hindurch strömt, und gleichzeitig den Sauerstoffdruck innerhalb der Blaslanze aufrechtzuerhalten.

In einer vorteilhaften Weiterführung ist mindestens eine faseroptische Leitung als Messleitung zur Kontaktierung des Schwingungssensors vorgesehen. Auf diese Weise kann eine spannungsfreie Übermittlung der Messwerte vorgenommen werden, wodurch die Betriebssicherheit verbessert wird.

Um eine entsprechende Auswertung zu erreichen, kann bevorzugt eine Auswerte- und Regeleinheit zur Auswertung des Schwingungsverhaltens der Blaslanze vorgesehen sein, um bevorzugt das Vorliegen von Verbärungen und/oder die Bestimmung des Schlackenstandes in einem Konvertergefäß zu identifizieren.

In einer weiteren vorteilhaften Weiterbildung sind neben dem Schwingungssensor thermische und/oder optische Sensoren innerhalb der Blaslanze vorgesehen, welche für den Betrieb der Blaslanze wesentliche Parameter aufnehmen. Durch die zusätzlichen, im Inneren der Lanze vorgesehenen drahtgebundenen oder lichtleitergebundenen optischen und thermischen Sensoren können weitere relevante Zustände am Lanzenkopf bzw. in unmittelbarer Nähe des Lanzenkopfes erfasst werden. Zur Datenübermittlung wird dabei bevorzugt ein Hybrid-Faseroptisches System eingesetzt, um unterschiedliche physikalische Größen gleichzeitig zu übertragen.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: schematisch eine geschnittene Seitenansicht eines Konverters, und
- Figur 2: schematisch das untere Ende einer Blaslanze in einer teilweise geschnittenen Ansicht.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet und auf eine wiederholte Beschreibung dieser Elemente wird teilweise verzichtet, um Redundanzen in der Beschreibung zu vermeiden.

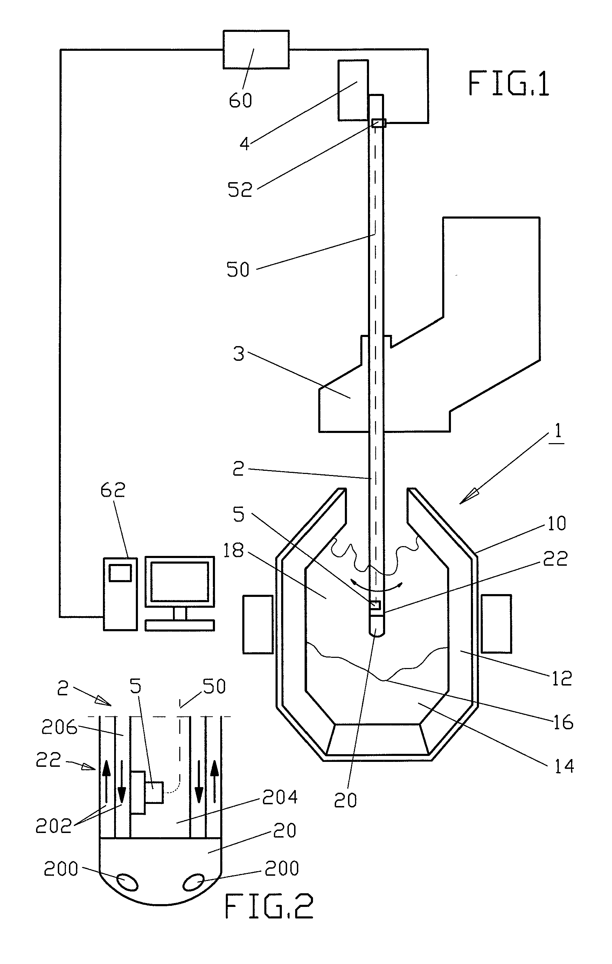

In Figur 1 ist ein Konvertergefäß 1 zu sehen, welches mit einer Konverterwand 10 ausgebildet ist. Die Innenseite der Konverterwand 10 ist mit Feuerfestmaterial 12 belegt.

In das Konvertergefäß 1 ist eine Blaslanze 2 eingeführt, welche an einem Lanzendom 3 geführt ist. Die Blaslanze 2 trägt einen Lanzenkopf 20, welcher in einem am unteren Ende der Blaslanze 2 liegenden Anbindungsabschnitt 22 mit der Blaslanze 2 verbunden ist. Entsprechend ist der Lanzenkopf 20 am untersten Ende der Blaslanze 2 vorgesehen und taucht entsprechend am tiefsten in das Konvertergefäß 1 ein. Der Lanzenkopf 20 ist mit der Blaslanze 2 fest verbunden.

Im Konvertergefäß 1 befindet sich die schematisch angedeutete Metallschmelze 14. Um eine intensive Entkohlungsreaktion der Schmelze 14 hervorzurufen, wird mittels der Blaslanze 2 Sauerstoff mit einem hohen Impuls auf die Oberfläche der Schmelze 14 aufgebracht. Hierzu wird der Sauerstoff über einen Sauerstoffflansch 4 in die Blaslanze 2 unter Druck eingebracht und tritt am Lanzenkopf 20 durch entsprechende Überschalldüsen mit Überschallgeschwindigkeit derart aus, dass in der Schmelze 14 eine oszillierende Blasmulde 16 entsteht. Die Sauerstoffstrahlen, die von dem Lanzenkopf 20 ausgehen, sorgen für eine intensive Entkohlungsreaktion in der Schmelze 14.

Typischerweise hat die Blaslanze 2 einen Durchmesser von bis zu 40 cm und eine Länge von etwa 20 m. Das Sauerstoffvolumen, welches typischer Weise durch eine Blaslanze 2 auf die Schmelze 14 aufgeblasen wird, liegt typischerweise in einem Volumenstrombereich von 400 Nm³/min bis 1000 Nm³/min bei einem Druck von 8 bis 13 bar.

Die Entkohlungsreaktion der Schmelze 14 führt dazu, dass sich eine Schlacke 18 auf der Oberfläche der Schmelze 14 ausbildet. Der Stand der Schlacke 18 in dem Konvertergefäß 1 ist dabei ein Indikator zur Führung des Entkohlungsprozesses. Wie in Figur 1 schematisch angedeutet, taucht die Blaslanze 2 in die Schlacke 16 ein, sobald die Schlacke 18 einen bestimmten Stand im Konvertergefäß 1 erreicht hat.

Durch den Austritt des Sauerstoffs unter einem hohen Druck und bei Überschallgeschwindigkeit wird die Blaslanze 2 zu Schwingungen angeregt. Besonders am unteren Ende der Blaslanze 2 im Bereich des Lanzenkopfes 20 führt die Blaslanze 2 die durch die beiden Pfeile angedeuteten Schwingungen aus. Die Schwingungen der Blaslanze 2 sind zunächst dominiert von den Eigenschwingungen der Blaslanze 2, so dass hier im Wesentlichen harmonische Schwingungsmuster zu erkennen sind. Die Eigenschwingungen der Blaslanze 2 können durch Verbärungen an der Blaslanze 2, welche durch Spritzer der Schmelze 14 entstehen können, beeinflusst. Die von der Blaslanze 2 ausgeführten harmonischen Schwingungen haben dann entsprechend eine dominierende Frequenz. Sobald die Blaslanze 2 jedoch beginnt in die Schlacke 18 einzutauchen weil der Schlackenstand steigt, treten andere Schwingungskomponenten hinzu, insbesondere stochastische und nicht-harmonische Schwingungskomponenten, welche unter Anderem vom "Anstoßen" der Blaslanze 2 an der Schlacke 18 und der turbulenten Schlackendynamik herrühren.

Ein Schwingungssensor 5 ist innerhalb der Blaslanze 2 angeordnet, um die Schwingungen der Blaslanze 2 zu detektieren. Um eine möglichst große Amplitude messen zu können und um Einflüsse der die Blaslanze 2 haltenden Halterungen möglichst weit zu reduzieren, ist der Schwingungssensor 5 am unteren Ende der Blaslanze 2 innerhalb der Blaslanze 2 angeordnet und entsprechend im Bereich des Anbindungsabschnittes 22 des Lanzenkopfes 20 der Blaslanze 2 vorgesehen. Der Schwingungssensor 5 kann in Form eines üblichen Schwingungssensors ausgebildet sein. Eine entsprechende Messleitung 50 durchläuft die Blaslanze 2 vom Schwingungssensor 5 aus bis hin zu einer im oberen Bereich der Blaslanze 2 angeordneten Durchführung 52 für die Messleitung 50, welche druckdicht ausgebildet ist. Bevorzugt ist die druckdichte Durchführung 52 als Steckverbindung ausgeführt, so dass bei einem Wechsel der Blaslanze 2 eine einfache Kontaktierung des Schwingungssensors 5 durchgeführt werden kann.

Die Messsignale, welche vom Schwingungssensor 5 stammen, werden in einem Messverstärker 60 verstärkt und in einer Auswerte- und Regeleinheit 62 ausgewertet.

In Figur 2 ist der Lanzenkopf 20 sowie der Anbindungsabschnitt 22 der Blaslanze 2 in einer vergrößerten, aber dennoch schematischen Ansicht gezeigt. Im Lanzenkopf 20 sind die Lavaldüsen 200 zu erkennen, durch welche hindurch der Sauerstoff mit Überschallgeschwindigkeit auf die Schmelze 14 beschleunigt wird.

Der Querschnitt durch die Blaslanze 2 zeigt im Bereich der Außenwand zwei Kühlwasserkanäle zur Wasserkühlung 202 der Blaslanze 2, welche von Kühlwasser durchströmt sind und welche dafür sorgen, dass die Blaslanze 2 eine hohe Standzeit erreicht. Die hier verwendeten Kühlwassermengen liegen bei ungefähr 250 m³ pro Stunde bei einem Druck von 8 bar.

Im Innenbereich 204 der Blaslanze wird der Sauerstoff von dem in Figur 1 gezeigten Sauerstoffflansch 4 bis zum Lanzenkopf 20 geführt. Entsprechend ist ein Innenrohr 206 vorgesehen, durch welches hindurch der Sauerstoff strömt und welches ebenfalls im Wesentlichen über die Wasserkühlung 22 gekühlt bzw. gegenüber den im Konvertergefäß 1 herrschenden Bedingungen abgeschirmt wird.

Der Schwingungssensor 5 ist entsprechend auf einer Innenseite des Innenrohrs 206 angeordnet und zwar im Bereich des Anbindungsabschnitts 22 des Lanzenkopfes innerhalb der Blaslanze 2.

Entsprechend ist der Schwingungssensor 5 kurz oberhalb des Lanzenkopfes 20 angeordnet, so dass er bei einem Austausch des Lanzenkopfes 20 einfach gesichtet, getestet und gegebenenfalls ausgewechselt werden kann.

Die über den Messverstärker 60 und die Auswerte- und Regeleinheit 62 durchgeführte Analyse der Schwingungen der Blaslanze 2, welche über den Schwingungssensor 5 aufgenommen werden, kann mittels einer genauen Analyse der Eigenfrequenzen der Blaslanze 2 durchgeführt werden. Diese Analyse bietet die Möglichkeit, Hinweise über das Entstehen von Verbärungen an der Lanzenspitze während des Konverterprozesses zu erhalten, da mit den Änderungen der Masse der Blaslanze 2 sich auch deren Eigenfrequenz ändert. Durch die vorgeschlagene Positionierung des Schwingungssensors innerhalb der Blaslanze 2 im Bereich der Lanzenspitze wird entsprechend ein hohes Signal-Rauschverhältnis erreicht, so dass hier eine besonders genaue Messung durchgeführt werden kann.

Ein hohes Signal-Rauschverhältnis ergibt sich überhaupt durch die Positionierung des Schwingungssensors 5 an der Spitze der Blaslanze 2, da die Schwingungen der Blaslanze 2 in diesem Bereich lediglich durch den Schlackenstand beeinflusst werden. Andere, prozessfremde Größen bestimmen die Schwingungen der Blaslanze 2 an deren Spitze weniger stark bzw. überhaupt nicht.

Durch die Analyse der Schwingungen der Blaslanze 2 kann neben dem Auftreten von Verbärungen an der Blaslanze 2 oder der Ermittlung des Standes der Schlacke 18 auch ein drohender oder bereits stattfindender Schlackenauswurf erkannt werden und der Prozess entsprechend umgesteuert werden.

Der Schwingungssensor 5, welcher innerhalb der Blaslanze 2 in einer vollständigen Sauerstoffatmosphäre angeordnet ist, kann aus Sicherheitsgründen entweder ein vollständig elektrisch isoliertes stromführendes System sein, aber es kann auch ein vollständig stromfreies, faseroptisches System verwendet werden. Auch für solche faseroptischen Systeme ist eine druckfeste Durchführung im Bereich der Durchführung 52 vorteilhaft und es können entsprechende Steckersysteme eingesetzt werden.

Die jeweiligen Messleitungen 50 zu dem Schwingungssensor 5 sind vorteilhaft innerhalb des Innenrohrs 206 verlegt und entsprechend werden sie auch die ganze Zeit von dem Sauerstoffstrom umspült und entsprechend auch durch diesen gekühlt.

Zusätzlich kann hier nicht gezeigte drahtgebundene oder lichtleitergebundene optische und thermische Sensorik verwendet werden, um für die Steuerung relevante Zustände am Lanzenkopf bzw. in unmittelbarer Nähe des Lanzenkopfes zu erfassen. Hier bieten sich besonders Hybrid-faseroptische Systeme an, mittels welcher in einem Lichtleiter verschiedene physikalische Größen gleichzeitig ermittelt bzw. übermittelt werden können.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Konvertergefäß
- 10: Gefäßwand
- 12: Feuerfestmaterial
- 14: Schmelze
- 16: oszillierende Blasmulde
- 18: Schlacke
- 2: Blaslanze
- 20: Lanzenkopf
- 22: Anbindungsabschnitt
- 200: Überschalldüse
- 202: Wasserkühlung
- 204: Innenbereich für Sauerstoffzufuhr
- 206: Innenrohr
- 3: Lanzendom
- 4: Sauerstoffflansch
- 5: Schwingungssensor
- 50: Messleitung
- 52: druckdichte Durchführung
- 60: Messverstärker
- 62: Auswerte- und Regeleinheit

## Patentansprüche

1. Blaslanze (2) für einen BOF-Konverter,
**dadurch gekennzeichnet, dass**
ein Schwingungssensor (5) zur Detektion der Lanzenschwingungen innerhalb der Blaslanze (2) vorgesehen ist.

2. Blaslanze (2) gemäß Anspruch 1, wobei der Schwingungssensor (5) am unteren Ende der Blaslanze (2) angeordnet ist, wobei die Blaslanze (2) einen Anbindungsabschnitt (22) zum Anbinden eines Lanzenkopfes (20) aufweist und der Schwingungssensor (5) in der Nähe des Anbindungsabschnittes (22) innerhalb der Blaslanze (2) angeordnet ist.

3. Blaslanze gemäß Anspruch 1 oder 2, wobei der Schwingungssensor (5) auf der Innenseite eines Innenrohres (206) angeordnet ist, welches in der Blaslanze angeordnet ist und zur Führung von Sauerstoff durch die Blaslanze (2) dient.

4. Blaslanze gemäß einem der vorstehenden Ansprüche, wobei mindestens eine Messleitung (50) zur Kontaktierung des Schwingungssensors (5) innerhalb der Blaslanze (2) geführt ist.

5. Blaslanze gemäß Anspruch 4, wobei mindestens eine druckdichte Durchführung (52) der Messleitung (50) im oberen Ende der Blaslanze (2) vorgesehen ist.

6. Blaslanze nach Anspruch 5, **dadurch gekennzeichnet, dass** die druckdichte Durchführung (52) in Form einer Steckverbindung ausgebildet ist.

7. Blaslanze nach Anspruch 6,
**dadurch gekennzeichnet, dass**
die druckdichte Durchführung (52) Im Bereich eines Sauerstoffflansches (4) angeordnet ist.

8. Blaslanze gemäß einem der Ansprüche 4 oder 5, wobei mindestens eine faseroptische Leitung als Messleitung zur Kontaktierung des Schwingungssensors (5) vorgesehen ist.

9. Blaslanze gemäß einem der vorstehenden Ansprüche, wobei eine Auswerte- und Regelelnhelt (62) zur Auswertung des Schwingungsverhaltens der Blaslanze (2) vorgesehen ist, um bevorzugt das Vorliegen von Verbärungen und/oder die Bestimmung des Schlackenstandes in einem Konvertergefäß (1) zu identifizieren.

10. Blaslanze gemäß einem der vorstehenden Ansprüche, wobei neben dem Schwingungssensor (5) thermische und/oder optische Sensoren innerhalb der Blaslanze vorgesehen sind, welche für den Betrieb der Blaslanze (2) wesentliche Parameter aufnehmen.

11. Blaslanze gemäß einem der vorstehenden Ansprüche, wobei ein Hybrid-Faseroptisches System eingesetzt wird, um unterschiedliche physikalische Größen gleichzeitig zu übertragen.

## Claims

1. Blowing lance (2) for a BOF converter, **characterised in that** a vibration sensor (5) for detection of lance vibrations is provided within the blowing lance (2).

2. Blowing lance (2) according to claim 1, wherein the vibration sensor (5) is arranged at the lower end of the blowing lance (2), wherein the blowing lance (2) has a coupling section (22) for coupling of a lance head (20) and wherein the vibration sensor (5) is arranged within the blowing lance (2) in the vicinity of the coupling section (22).

3. Blowing lance according to claim 1 or 2, wherein the vibration sensor (5) is arranged on the inner side of an inner tube (206), which is arranged in the blowing lance and serves to conduct oxygen through the blowing lance (2).

4. Blowing lance according to any one of the preceding claims, wherein at least one measurement line (50) for contact-making with the vibration sensor (5) is guided within the blowing lance (2).

5. Blowing lance according to claim 4, wherein at least one pressure-tight passage (52) of the measurement line (50) is provided in the upper end of the blowing lance (2).

6. Blowing lance according to claim 5, **characterised in that** the pressure-tight passage (52) is constructed in the form of a plug connection.

7. Blowing lance according to claim 6, **characterised in that** the pressure-tight passage (52) is constructed in the region of an oxygen flange (4).

8. Blowing lance according to one of claims 4 and 5, wherein at least one fibre-optical line as measurement line for contact-making with the vibration sensor (5) is provided.

9. Blowing lance according to any one of the preceding claims, wherein an evaluating and regulating unit (62) for evaluation of the vibration behaviour of the blowing lance (2) is provided in order to preferably identify the presence of skull formations and/or determination of the slag state in a converter vessel (1).

10. Blowing lance according to any one of the preceding claims, wherein apart from the vibration sensor (5) thermal and/or optical sensors, which pick up parameters significant for operation of the blowing lance (2), are provided within the blowing lance.

11. Blowing lance according to any one of the preceding claims, wherein use is made of a hybrid fibre-optical system in order to simultaneously transmit different physical magnitudes.

## Revendications

1. Lance de soufflage (2) pour un convertisseur basique à oxygène, **caractérisée en ce qu'**on prévoit un capteur d'oscillations (5) pour détecter des oscillations de lance à l'intérieur de la lance de soufflage (2).

2. Lance de soufflage (2) selon la revendication 1, dans laquelle le capteur d'oscillations (5) est disposé à l'extrémité inférieure de la lance de soufflage (2), la lance de soufflage (2) présentant un tronçon de raccordement (22) pour le raccordement d'une tête de lance (20) et le capteur d'oscillations (5) étant disposé à proximité du tronçon de raccordement (22) à l'intérieur de la lance de soufflage (2).

3. Lance de soufflage selon la revendication 1 ou 2, dans laquelle le capteur d'oscillations (5) est disposé sur le côté interne d'un tube interne (206) qui est disposé dans la lance de soufflage et qui sert au guidage de l'oxygène à travers la lance de soufflage (2).

4. Lance de soufflage selon l'une quelconque des revendications précédentes, dans laquelle au moins un circuit de mesure (50) est guidé à l'intérieur de la lance de soufflage (2) pour une mise en contact avec le capteur d'oscillations (5).

5. Lance de soufflage selon la revendication 4, dans laquelle on prévoit au moins un passage (52) du circuit de mesure (50), étanche à la pression dans l'extrémité supérieure de la lance de soufflage (2).

6. Lance de soufflage selon la revendication 5, **caractérisée en ce que** le passage (52) étanche à la pression est réalisé sous la forme d'un connecteur.

7. Lance de soufflage selon la revendication 6, **caractérisée en ce que** le passage (52) étanche à la pression est disposé dans la zone d'une bride (4) pour l'oxygène.

8. Lance de soufflage selon l'une quelconque des revendications 4 ou 5, dans laquelle on prévoit au moins un circuit en fibre optique à titre de circuit de mesure pour la mise en contact avec le capteur d'oscillations (5).

9. Lance de soufflage selon l'une quelconque des revendications précédentes, dans laquelle on prévoit une unité d'évaluation et de réglage (62) pour l'évaluation du comportement d'oscillation de la lance de soufflage (2) pour de préférence identifier la présence de croûtes de laitier et/ou la détermination du niveau de scories dans une cuve de convertisseur (1).

10. Lance de soufflage selon l'une quelconque des revendications précédentes, dans laquelle on prévoit à côté du capteur d'oscillations (5), des capteurs thermiques et/ou optiques à l'intérieur de la lance de soufflage qui enregistrent des paramètres essentiels pour le fonctionnement de la lance de soufflage (2).

11. Lance de soufflage selon l'une quelconque des revendications précédentes, dans laquelle on met en oeuvre un système hybride de fibre optique pour transmettre de manière simultanée des valeurs physiques différentes.
